# EUROPÄISCHE PATENTANMELDUNG

(11) **EP 3 982 307 A1**
(43) Veröffentlichungstag der Anmeldung: **13.04.2022**
(21) Anmeldenummer: 20200965.0
(22) Anmeldetag: 09.10.2020
(51) Int. Cl.: G06Q 10/06, G06Q 50/08, E21B 44/00

(54) **BAUROBOTER, BAUROBOTERSYSTEM UND VERFAHREN ZUR STEUERUNG EINES BAUROBOTERSYSTEMS**

(71) Anmelder: Hilti Aktiengesellschaft, 9494 Schaan (LI)
(72) Erfinder: Brugger, Peter, 6800 Feldkirch (AT); Zanona, Julia, 6800 Feldkirch (AT)
(74) Vertreter: Hilti Aktiengesellschaft Corporate Intellectual Property

(57) **Zusammenfassung**

Die Erfindung betrifft einen Bauroboter (10, 10.1, 10.2, 10.3) zur Ausführung von Bauaufgaben auf einer Baustelle, insbesondere einer Hochbau- und / oder einer Tiefbau-Baustelle, umfassend wenigstens einen Manipulator (18) zur Ausführung einer Bauaufgabe, ein internes Bauaufgabenverwaltungssystem (29), das eingerichtet ist, eine interne Bauaufgabenliste (30) des Bauroboters (10, 10.1, 10.2, 10.3) abrufbar zu speichern, wobei die interne Bauaufgabenliste (30) ein oder mehrere vom Bauroboter (10, 10.1, 10.2, 10.3) auf der Baustelle auszuführende Bauaufgaben umfasst, und eine Kommunikationsschnittstelle (32) zur Kommunikation mit einem externen Bauaufgabenverwaltungssystem, wobei das externe Bauaufgabenverwaltungssystem eingerichtet ist, eine externe Bauaufgabenliste abrufbar zu speichern, wobei die externe Bauaufgabenliste ein oder mehrere auf der Baustelle auszuführende Bauaufgaben umfasst, wobei der Bauroboter (10, 10.1, 10.2, 10.3) eingerichtet ist, über die Kommunikationsschnittstelle (32) wenigstens eine Bauaufgabe und / oder einen Bauaufgabenzustand einer Bauaufgabe der internen Bauaufgabenliste (30) an das externe Bauaufgabenverwaltungssystem zu senden. Weiter umfasst die Erfindung ein Baurobotersystem (100) sowie ein Verfahren (200) zur Steuerung wenigstens eines Bauroboters (10, 10.1, 10.2, 10.3) eines Baurobotersystems (100). Die Erfindung ermöglicht eine dokumentierte Ausführung von Bauaufgaben auf einer Baustelle.

## Beschreibung

Die Erfindung geht aus von einem Bauroboter zur Ausführung von Bauaufgaben auf einer Baustelle, insbesondere einer Hochbau- und / oder einer Tiefbau-Baustelle, umfassend wenigstens einen Manipulator zur Ausführung einer Bauaufgabe, wie er beispielsweise aus der Druckschrift WO 2016/066615 A2 bekannt ist. Die Erfindung betrifft des Weiteren ein Baurobotersystem sowie ein Verfahren zur Steuerung wenigstens eines Bauroboters eines Baurobotersystems.

Mithilfe von so genannten Building Information Modeling (im Folgenden: BIM)-Planungssystemen können Planungsdaten zu zu erstellenden Gebäuden zusammengestellt werden. Diese Planungsdaten umfassen in der Regel unterschiedliche Bauaufgaben, die zur Erstellung des Gebäudes auszuführen sind. Diese Planungsdaten werden in der Regel in zentralen Datenbanken gespeichert. Die Planungsdaten werden von unterschiedlichen, mit der Ausführung der Bauaufgaben betreuten Personen manuell ausgewählt, die ausgewählten Bauaufgaben werden von diesen Personen ausgeführt. Zur Information verschiedener Interessensgruppen wird der jeweils erreichte Baufortschritt manuell erfasst und in den Planungsdaten notiert. Hierdurch entsteht ein zusätzlicher Bearbeitungsaufwand, durch den der Nutzen der Einführung eines BIM-Planungssystems erheblich geschmälert wird.

Wünschenswert wäre es, wenn der Baufortschritt in Bezug auszuführende Bauaufgaben in den Planungsdaten selbsttätig abbildbar wäre.

Aufgabe der vorliegenden Erfindung ist es daher, einen Bauroboter, ein Baurobotersystem sowie ein Verfahren zur Steuerung eines Bauroboters anzubieten, die eine dokumentierte Ausführung von Bauaufgaben einer Bauaufgabenliste ermöglichen.

Gelöst wird die Aufgabe durch einen **Bauroboter** zur Ausführung von Bauaufgaben auf einer Baustelle, insbesondere einer Hochbau- und / oder einer Tiefbau-Baustelle, umfassend wenigstens einen Manipulator zur Ausführung einer Bauaufgabe, ein internes Bauaufgabenverwaltungssystem, das eingerichtet ist, eine interne Bauaufgabenliste des Bauroboters abrufbar zu speichern, wobei die interne Bauaufgabenliste ein oder mehrere vom Bauroboter auf der Baustelle auszuführende Bauaufgaben umfasst, und eine Kommunikationsschnittstelle zur Kommunikation mit einem externen Bauaufgabenverwaltungssystem, wobei das externe Bauaufgabenverwaltungssystem eingerichtet ist, eine externe Bauaufgabenliste abrufbar zu speichern, wobei die externe Bauaufgabenliste ein oder mehrere auf der Baustelle auszuführende Bauaufgaben umfasst, wobei der Bauroboter eingerichtet ist, über die Kommunikationsschnittstelle wenigstens eine Bauaufgabe und / oder einen Bauaufgabenzustand einer Bauaufgabe der internen Bauaufgabenliste an das externe Bauaufgabenverwaltungssystem zu senden.

Der Manipulator kann als Arbeitsarm, vorzugsweise mit einem Endeffektor, ausgebildet sein und / oder einen solchen umfassen. Der Endeffektor kann eingerichtet sein, eine Werkzeugmaschine, beispielsweise einen Bohrhammer, zu halten. Alternativ oder ergänzend kann am Endeffektor eine Werkzeugmaschine, beispielsweise ein Bohrhammer, ausgebildet sein.

Eine Bauaufgabe kann beispielsweise eine Erstellung einer Bohrung, insbesondere in eine Decke, in eine Wand und / oder in einen Boden, umfassen.

Die Bauaufgabenverwaltungssysteme können jeweils eine Rechnereinheit umfassen. Sie können insbesondere eine Speichereinheit zur abrufbaren Speicherung der internen beziehungsweise der externen Bauaufgabenliste umfassen. Zu einer Bauaufgabe kann in der Bauaufgabenliste jeweils auch ein Bauaufgabenzustand speicherbar sein.

Ein Bauaufgabenzustand kann einem Erledigungsgrad einer ihm zugeordneten Bauaufgabe entsprechen. Der Erledigungsgrad kann wenigstens Ordinalskalenniveau aufweisen. Beispielsweise kann der Bauaufgabenzustand einem der Zustandswerte "Bauaufgabe noch nicht begonnen", "Bauaufgabe wird ausgeführt" oder "Bauaufgabe ausgeführt" entsprechen. Allgemein kann der Bauaufgabenzustand in einem wenigstens zweistufigen Skalenniveau erfassbar und / oder erfasst sein. Der Bauaufgabenzustand kann auch Informationen über einen Fehlerfall enthalten oder entsprechen. Beispielsweise kann der Bauaufgabenzustand auch einem fehlerhaften oder unvollständigen Bohrens eines Bohrlochs oder einem entsprechenden Nachbearbeitungsbedarf entsprechen.

Das externe Bauaufgabenverwaltungssystem und die externe Bauaufgabenliste können einem internen Bauaufgabenverwaltungssystem beziehungsweise einer internen Bauaufgabenliste eines weiteren, insbesondere gleichartigen, zweiten Bauroboters entsprechen und / oder dieses beziehungsweise diese umfassen.

Alternativ kann das externe Bauaufgabenverwaltungssystem einem globalen Bauaufgabenverwaltungssystem, insbesondere mit einer globalen Bauaufgabenliste, entsprechen. Das externe Bauaufgabenverwaltungssystem kann ein BIM-Planungssystem sein. Die externe Bauaufgabenliste kann in Form von oder als Teil von BIM-Daten ausgebildet sein oder BIM-Daten umfassen.

Der Erfindung liegt dabei der Gedanke zugrunde, den Bauroboter mit einer Kommunikationsschnittstelle auszustatten, sodass dieser während und / oder nach erfolgter Ausführung einer Bauaufgabe seiner internen Bauaufgabenliste dem externen Bauaufgabenverwaltungssystem die Bauaufgabe und / oder ihren Bauaufgabenzustand mitteilen kann. Das externe Bauaufgabenverwaltungssystem kann somit die externe Bauaufgabenliste anhand der erhaltenen Daten aktualisieren, sodass eine dokumentierte Ausführung der Bauaufgaben der internen und / oder der externen Bauaufgabenliste ermöglicht wird.

Weist der Bauroboter eine Anzeigeeinheit auf, die eingerichtet ist, wenigstens eine Bauaufgabe der internen Bauaufgabenliste, vorzugsweise alle Bauaufgaben der internen Bauaufgabenliste, und / oder wenigstens einen Bauaufgabenzustand anzuzeigen, so kann ein Benutzer des Bauroboters mithilfe der Anzeigeeinheit über die aktuell vom Bauroboter auszuführenden Bauaufgaben informiert werden. Vorzugsweise ist die Anzeigeeinheit mit einer Eingabeeinheit verbunden, sodass Eingaben des Benutzers direkt am Bauroboter ermöglicht werden; dazu kann die Anzeigeeinheit einen Touchscreen umfassen.

Der Bauroboter kann eingerichtet sein, dass wenigstens eine Bauaufgabe seiner internen Bauaufgabenliste durch den Benutzer änderbar, insbesondere erstellbar, abänderbar und / oder löschbar, ist. Er kann ferner eingerichtet sein, seine interne Bauaufgabenliste oder zumindest Änderungen an der Bauaufgabenliste über die Kommunikationsschnittstelle an das externe Bauaufgabenverwaltungssystem zu senden.

Auch kann der Bauroboter eingerichtet sein, Änderungen an der externen Bauaufgabenliste über seine Kommunikationsschnittstelle von dem externen Bauaufgabenverwaltungssystem zu empfangen.

Vorzugsweise umfasst die Kommunikationsschnittstelle eine drahtlose Kommunikationsschnittstelle, beispielsweise eine allgemein als "WLAN"- und / oder allgemein als "Bluetooth"-Schnittstelle bekannte Schnittstelle, sodass der Aufbau einer Kommunikation mittels der Kommunikationsschnittstelle keine Verlegung von Kabeln oder dergleichen erfordert und zudem auch über größere Distanzen im Bereich von beispielsweise mehreren Metern eine Kommunikation möglich ist. Denkbar ist insbesondere auch, dass die Kommunikationsschnittstelle eine Mobilfunk-Schnittstelle umfasst, beispielsweise entsprechend einem allgemein als 2G-, 3G-, 4G- und / oder 5G-Standard bekannten Standard, wodurch eine Kommunikation über besonders weite Distanzen möglich wird.

Alternativ oder ergänzend kann die Kommunikationsschnittstelle auch zur Datenübertragung mittels einer tragbaren Speichereinheit eingerichtet sein. Die tragbare Speichereinheit kann beispielsweise in Form eines tragbaren nichtflüchtigen Speichers, wie beispielsweise allgemein unter der Bezeichnung USB-Stick bekannt, ausgebildet sein. Sie kann auch Teil eines tragbaren elektronischen Gerätes, beispielsweise eines Mobilfunkgeräts, sein. Eine derartige Datenübertragung kann insbesondere auf Baustellen sinnvoll oder gar notwendig sein, bei denen eine drahtlose Kommunikation nicht oder nur eingeschränkt möglich ist, beispielsweise bei einer Kommunikation über mehrere Geschosse eines eisenarmierten Betongebäudes hinweg.

Weist der Bauroboter eine Positionsdetektionseinheit zur Bestimmung seiner Position und / oder seiner Lage, insbesondere einer Position und / oder einer Lage seines Manipulators, auf, so können hiermit erfasste Positionsdaten beispielsweise bei der Festlegung der Abarbeitungsreihenfolge der von dem Bauroboter auszuführenden Bauaufgaben berücksichtigt werden.

Ist der Bauroboter eingerichtet, wenigstens eine Position und / oder eine Lage, insbesondere seiner selbst und / oder seines Manipulators und / oder eines anderen Bauroboters und / oder eines anderen Manipulators, über die Kommunikationsschnittstelle zu empfangen und / oder zu senden, so können weitere auszuführende Bauaufgaben in Abhängigkeit von seinem Standort für den Bauroboter ausgewählt und / oder ihm zugeteilt werden. Beispielsweise können dem Bauroboter vorrangig diejenigen Bauaufgaben zugeordnet werden, die in seiner Nähe auszuführen sind.

Denkbar ist, dass der Bauroboter sich teilautonom, insbesondere unter notwendiger Aufsicht eines Benutzers des Bauroboters, oder autonom, insbesondere ohne notwendiger Aufsicht durch einen Benutzer, fortbewegend ausgebildet sein kann. Er kann auch eine Bauaufgabe teilautonom oder autonom ausführend ausgebildet sein. Während Sicherheitsanforderungen auf Baustellen bei sich teilautonom fortbewegenden und / oder teilautonom Bauaufgaben ausführenden Baurobotern einfacher erfüllbar sind, wird eine von dem Benutzer unabhängige Ausführung von Bauaufgaben insbesondere durch einen Bauroboter ermöglicht, der zugleich autonom fortbewegend als auch Bauaufgaben autonom ausführend ausgebildet ist.

Die Kommunikationsschnittstelle des Bauroboters kann mehr als einen Kommunikationskanal anbieten. Hierdurch lassen sich Arbeitsunterbrechungen aufgrund einer geringen Verbindungsqualität auf einem Kommunikationskanal vermeiden. Beispielsweise kann der Bauroboter eingerichtet sein, bei fehlender Datenverbindung zu einem überregionalen und / oder zu einem lokales Netzwerk, insbesondere einem Funknetzwerk wie beispielsweise einem WLAN-Netzwerk, auf einen alternativen Kommunikationskanal, beispielsweise auf eine Datenübertragung mittels tragbarer Speichereinheiten, umzuschalten.

In den Rahmen der Erfindung fällt des Weiteren ein **Baurobotersystem** zur Ausführung von Bauaufgaben auf einer Baustelle, umfassend einen ersten, erfindungsgemäßen Bauroboter und ein externes Bauaufgabenverwaltungssystem, das eingerichtet ist, eine externe Bauaufgabenliste abrufbar zu speichern, wobei die externe Bauaufgabenliste ein oder mehrere auszuführende Bauaufgaben umfasst, und wobei der erste Bauroboter eingerichtet ist, über seine Kommunikationsschnittstelle mit dem externen Bauaufgabenverwaltungssystem zu kommunizieren. Insbesondere kann der erste Bauroboter eingerichtet sein, über seine Kommunikationsschnittstelle wenigstens eine Bauaufgabe und / oder einen Bauaufgabenzustand einer Bauaufgabe seiner internen Bauaufgabenliste an das externe Bauaufgabenverwaltungssystem zu senden.

Das externe Bauaufgabenverwaltungssystem kann ein BIM-Planungssystem umfassen. Die externe Bauaufgabenliste kann in Form von oder als Teil von BIM-Daten ausgebildet sein.

Das Baurobotersystem ermöglicht es somit, dass der Bauroboter Bauaufgaben und / oder einen Bauaufgabenzustand an das externe Bauaufgabenverwaltungssystem sendet. Die dort befindlichen Bauaufgaben der externen Bauaufgabenliste lassen sich somit aktualisieren und der durch den Bauroboter erzielte Baufortschritt lässt sich dokumentieren.

Das externe Bauaufgabenverwaltungssystem kann ein globales Bauaufgabenverwaltungssystem umfassen. Das Bauaufgabenverwaltungssystem kann eingerichtet sein, eine globale Bauaufgabenliste abrufbar zu speichern, wobei die globale Bauaufgabenliste ein oder mehrere auf der Baustelle auszuführende Bauaufgaben umfasst. Dazu kann das globale Bauaufgabenverwaltungssystem eine Rechnereinheit mit einer Speichereinheit zur abrufbaren Speicherung der globalen Bauaufgabenliste umfassen. Insbesondere kann es ein zentrales Datenbanksystem umfassen.

Das Baurobotersystem kann auch wenigstens einen zweiten, erfindungsgemäßen Bauroboter umfassen, wobei das externe Bauaufgabenverwaltungssystem das interne Bauaufgabenverwaltungssystem des zweiten Bauroboters umfasst. Insbesondere kann das externe Bauaufgabenverwaltungssystem dem internen Bauaufgabenverwaltungssystem des zweiten Bauroboters entsprechen. Somit kann der erste Bauroboter eingerichtet sein, über seine Kommunikationsschnittstelle mit dem zweiten Bauroboter zu kommunizieren. Vorzugsweise ist auch der zweite Bauroboter eingerichtet, über seine Kommunikationsschnittstelle mit dem ersten Bauroboter zu kommunizieren.

Denkbar ist, dass der erste Bauroboter eingerichtet ist, dem zweiten Bauroboter und / oder dem globalen Bauaufgabenverwaltungssystem über seine Kommunikationsschnittstelle wenigstens eine Bauaufgabe und / oder wenigstens einen Bauaufgabenzustand zu senden. Vorzugsweise ist auch der zweite Bauroboter analog zur Kommunikation mit dem ersten Bauroboter und / oder dem globalen Bauaufgabenverwaltungssystem eingerichtet.

Somit kann der zweite Bauroboter beispielsweise über die Übernahme und / oder die Erledigung einer Bauaufgabe durch den ersten Bauroboter informiert werden, sodass Doppelarbeiten durch den zweiten Bauroboter vermieden werden.

Im Falle eines globalen Bauaufgabenverwaltungssystems kann diese Informationsübermittlung indirekt mittels der globalen Bauaufgabenliste erfolgen; im Falle einer Kommunikation zwischen dem ersten und dem zweiten Bauroboter kann sie direkt zwischen den beiden Baurobotern erfolgen.

Das Baurobotersystem kann eine Relaisstation zur Übermittlung wenigstens einer Bauaufgabe und / oder wenigstens eines Bauaufgabenzustands umfassen. Die Relaisstation kann beispielsweise zur Datenvermittlung zwischen einem lokalen Netzwerk, beispielsweise einem gemeinhin als "WLAN"-bezeichneten Netzwerk und einem überregionalen Netzwerk, insbesondere dem Internet, eingerichtet sein. Das lokale Netzwerk und dann vorzugsweise auch die Relaisstation können alternativ oder ergänzend zur Datenübertragung mittels einer tragbaren Speichereinheit eingerichtet sein.

Somit benötigen der erste und der wenigstens eine zweite Bauroboter keine direkte Datenverbindung an das überregionale Netzwerk, zu dem direkte Datenverbindungen beispielsweise in eisenarmierten Betongebäuden oftmals nur mit reduzierter Verbindungsqualität herstellbar sind.

Die Relaisstation kann eine Rechnereinheit umfassen. Insbesondere kann sie ebenfalls eine Speichereinheit umfassen. In der Speichereinheit der Relaisstation kann die globale Bauaufgabenliste oder zumindest eine Kopie der globalen Bauaufgabenliste speicherbar und / oder gespeichert sein. Allgemein kann die Rechnereinheit ein Bauaufgabenverwaltungssystem, insbesondere zur Verwaltung der globalen Bauaufgabenliste oder zumindest einer Kopie der globalen Bauaufgabenliste, umfassen. Somit können Arbeitsunterbrechungen aufgrund einer, gegebenenfalls temporär, mangelhaften Netzwerkverbindung zum überregionalen Netzwerk vermieden werden.

Das globale Bauaufgabenverwaltungssystem kann eine Cloud-basiertes Rechnereinheit umfassen oder Teil der Cloud-basierten Rechnereinheit sein. Dann kann das globale Bauaufgabensystem über das überregionale Netzwerk und die Relaisstation an das lokale Netzwerk und damit an den ersten Bauroboter und / oder den wenigstens einen zweiten Bauroboter anbindbar und / oder angebunden sein.

Die Erfindung umfasst ferner ein **Verfahren** zur Steuerung wenigstens eines Bauroboters eines erfindungsgemäßen Baurobotersystems, wobei wenigstens eine Bauaufgabe und / oder ein Bauaufgabenzustand der internen Bauaufgabenliste des Bauroboters an das externe Bauaufgabenverwaltungssystem gesandt wird. Verfahrensgemäß kann mit Hilfe der versandten Daten die vom externen Bauaufgabenverwaltungssystem verwaltete externe Bauaufgabenliste aktualisiert werden, sodass die Ausführung von Bauaufgaben dokumentierbar und / oder dokumentiert ist.

Bei einer Variante des Verfahrens wird zumindest eine Bauaufgabe und / oder ein Bauaufgabenzustand der internen Bauaufgabenliste eines ersten Bauroboters an das interne Bauaufgabenverwaltungssystem eines zweiten Bauroboters gesandt.

Alternativ oder ergänzend ist auch eine weitere Variante des Verfahrens denkbar, bei der zumindest eine Bauaufgabe und / oder ein Bauaufgabenzustand der internen Bauaufgabenliste des ersten Bauroboters an das globale Bauaufgabenverwaltungssystem gesandt wird.

Die beiden Varianten ermöglichen somit eine direkte beziehungsweise eine indirekte Aktualisierung der internen Bauaufgabenliste des zweiten Bauroboters. Die indirekte Aktualisierung kann mittels der globalen Bauaufgabenliste, insbesondere durch Senden von Daten an das globale Bauaufgabenverwaltungssystem durch den ersten Bauroboter und Abruf von Daten vom globalen Bauaufgabenverwaltungssystem durch den zweiten Bauroboter, erfolgen.

Denkbar ist insbesondere, dass bei Verfügbarkeit einer Datenverbindung mit dem überregionalen Netzwerk eine derartige indirekte Aktualisierung erfolgt. Wenn die Datenverbindung mit dem überregionalen Netzwerk unterbrochen ist oder gänzlich fehlt, kann die Aktualisierung direkt erfolgen.

Stehen auf einer Baustelle mehr als eine Arbeitskraft, insbesondere mehr als ein Bauroboter zur Verfügung, besteht die Problematik einer möglichst optimalen Verteilung von Bauaufgaben auf die zur Verfügung stehenden Arbeitskräfte. Wegstrecken, die insbesondere von einem Bauroboter zurückzulegen sind, um eine nachfolgende Bauaufgabe ausführen zu können, bringen stets einen Zeitverlust mit sich. Auch ist mit jeder zurückzulegenden Wegstrecke auf einer Baustelle ein Unfallrisiko verbunden.

Um daher zurückzulegende Wegstrecken zu vermeiden, ist bei einer Variante des Verfahrens vorgesehen, dass wenigstens einem der Bauroboter jeweils wenigstens eine auszuführende Bauaufgabe der externen Bauaufgabenliste in Abhängigkeit von seiner jeweiligen Position und / oder seiner Lage übermittelt wird.

Verfahrensgemäß kann wenigstens eine der auf der Baustelle auszuführenden Bauaufgaben, insbesondere eine der in der globalen Bauaufgabenliste enthaltenen Bauaufgaben, durch ein globales Bauaufgabenverwaltungssystem des Baurobotersystems wenigstens einem der Bauroboter zugeteilt werden.

Alternativ oder ergänzend kann wenigstens einer der Bauroboter eine durch ihn auszuführende Bauaufgabe aus der externen, insbesondere aus der globalen, Bauaufgabenliste auswählen.

Zur Auswahl können die Position und / oder die Lage des Bauroboters und / oder wenigstens eines der übrigen Bauroboter berücksichtigt werden. Alternativ oder ergänzend können auch Eigenschaften des Bauroboters und / oder wenigstens eines der übrigen Bauroboter berücksichtigt werden. Beispielsweise kann die Größe eines Arbeitsbereichs des Manipulators, innerhalb dessen der Manipulator Bauaufgaben ausführen kann, berücksichtigt werden. Insbesondere ist es denkbar, dass mehrere Bauaufgaben, die alle innerhalb eines Arbeitsbereichs des Bauroboters fallen, ohne dass der Bauroboter insgesamt verlagert werden muss, dem Bauroboter zur Ausführung zugeteilt werden oder vom Bauroboter zur Ausführung ausgewählt werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- **Fig. 1**: einen Bauroboter in schematischer Darstellung;
- **Fig. 2**: ein erstes Baurobotersystem in schematischer Darstellung;
- **Fig. 3**: ein zweites Baurobotersystem in schematischer Darstellung;
- **Fig. 4**: ein drittes Baurobotersystem in schematischer Darstellung; und
- **Fig. 5**: ein Ablaufdiagramm eines Verfahrens zur Steuerung wenigstens eines Bauroboters eines Baurobotersystems.

In der nachfolgenden Beschreibung der Figuren werden zur Erleichterung des Verständnisses der Erfindung für gleiche oder sich funktional entsprechende Elemente jeweils die gleichen Bezugszeichen verwendet.

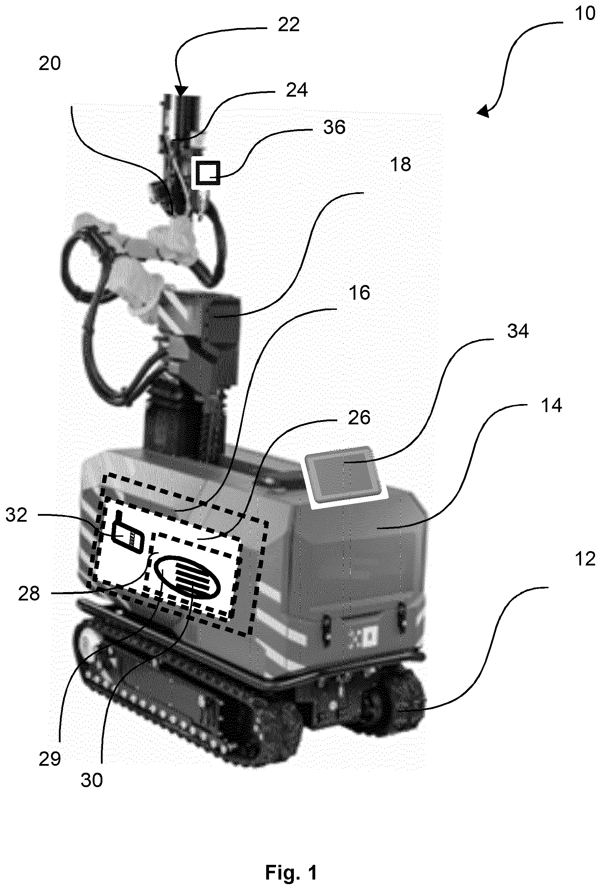

**Fig. 1** zeigt einen Bauroboter **10** mit einem als Kettenfahrwerk ausgebildeten Fahrwerk **12,** einem in einem Gehäuse **14** ausgebildeten Steuerraum **16** und einem oberseitig des Gehäuses 14 angeordneten Manipulator **18.** Der Manipulator 18 ist als multiaxial steuerbarer Arm ausgebildet, an dessen freien Ende ein Endeffektor **20** mit einer daran angeordneten Bohrwerkzeugmaschine **22** und einer Staubabsaugungsvorrichtung **24** angeordnet ist.

Der Bauroboter 10 ist zur Ausführung von Bauaufgaben, insbesondere von Bohrarbeiten in Decken und Wänden, auf einer Baustelle, beispielsweise auf einer Hochbaubaustelle, ausgebildet. Neben dem Manipulator 18 zur Ausführung der dem Bauroboter 10 zugeordneten Bauaufgaben, weist er eine innerhalb des Gehäuses 14, insbesondere im Steuerraum 16, angeordnete Rechnereinheit **26** auf. Die Rechnereinheit 26 umfasst eine Speichereinheit **28.**

Die Rechnereinheit 26 ist mit ausführbarem Programmcode ausgestattet, sodass mittels der Rechnereinheit 26 ein internes Bauaufgabenverwaltungssystem **29** mit einer internen Bauaufgabenliste **30,** die ein oder mehrere vom Bauroboter 10 auf der Baustelle auszuführende Bauaufgaben umfasst, ausgebildet ist. Die interne Bauaufgabenliste 30 ist dazu in der Speichereinheit 28 abrufbar gespeichert.

Die Rechnereinheit 26 und damit der Bauroboter 10 weisen ferner eine Kommunikationsschnittstelle **32** zur Kommunikation mit einem externen Bauaufgabenverwaltungssystem auf, wobei das externe Bauaufgabenverwaltungssystem eingerichtet ist, eine externe Bauaufgabenliste abrufbar zu speichern, wobei die externe Bauaufgabenliste ein oder mehrere auf der Baustelle auszuführende Bauaufgaben umfasst, wobei der Bauroboter 10 eingerichtet ist, über die Kommunikationsschnittstelle 32 wenigstens eine Bauaufgabe und / oder einen Bauaufgabenzustand einer Bauaufgabe der internen Bauaufgabenliste 30 an das externe Bauaufgabenverwaltungssystem zu senden.

Die Kommunikationsschnittstelle **32** weist eine Mobilfunkschnittstelle nach dem 4G- oder dem 5G-Standard, eine WLAN-Schnittstelle, eine Bluetooth-Schnittstelle als auch eine USB-Schnittstelle zur Datenübertragung mittels tragbarer USB-Speichereinheiten, auf.

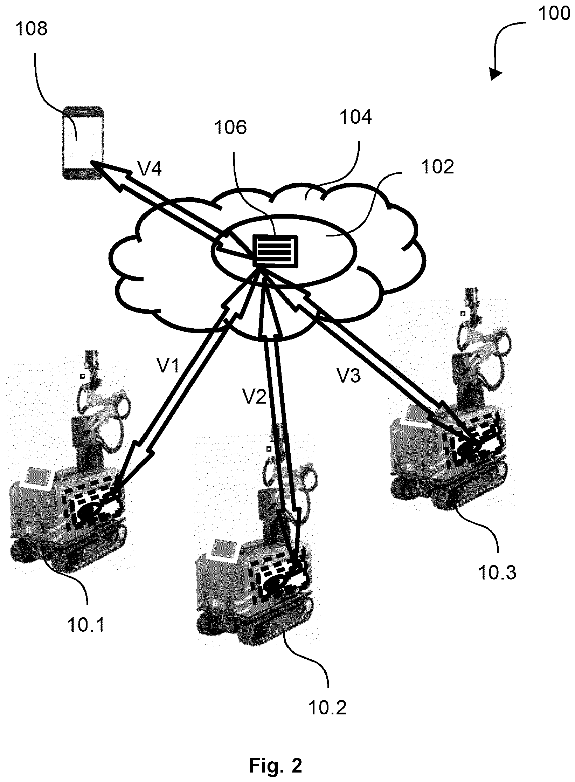

Da die Rechnereinheit 26, die Speichereinheit 28, das interne Bauaufgabenverwaltungssystem 29, die interne Bauaufgabenliste 30 sowie die Kommunikationsschnittstelle 32 im Steuerraum 16 und damit innerhalb des Gehäuses 14 angeordnet sind, sind diese einschließlich dem Steuerraum 16 in Fig. 1 sowie, sofern die jeweiligen Elemente dort abgebildet sind, auch in den weiteren Abbildungen gemäß Fig. 2 bis Fig. 5 schematisch dargestellt.

Weiter weist der Bauroboter 10 eine Anzeigeeinheit **34** auf, die als Touchscreen ausgebildet ist. Die Anzeigeeinheit 34 bildet somit zugleich eine Eingabeeinheit zur manuellen Dateneingabe durch einen Benutzer des Bauroboters 10. Insbesondere ist die Anzeigeeinheit 34 in Verbindung mit der Rechnereinheit 26 und dem internen Bauaufgabenverwaltungssystem **29** eingerichtet, die in der internen Bauaufgabenliste 30 enthaltenen Bauaufgaben einschließlich der den Bauaufgaben zugeordneten Bauaufgabenzuständen grafisch anzuzeigen. Dazu ist die Anzeigeeinheit 34 eingerichtet, die Baustelle oder zumindest einen relevanten Teil der Baustelle schematisch darzustellen und die von dem Bauroboter 10 auszuführenden Bauaufgaben, also Bohrungen, entsprechend der räumlichen Anordnung der Bauaufgaben grafisch in Form von entsprechend positionierten Kreisen darzustellen. Je nach dem zugehörigen Bauaufgabenzustand, in diesem Fall je nach dem jeweiligen Erledigungsgrad, werden die Kreise unterschiedlich farblich gefüllt dargestellt. Die Bauaufgaben sowie die jeweils zugeordneten Bauaufgabenzustände können zudem durch den Benutzer manuell geändert werden.

Eine Positionsdetektionseinheit **36** zur Bestimmung der Position und der Lage des Manipulators 18 und damit des Bauroboters 10 ist am Endeffektor 20 ausgebildet.

Der Bauroboter 10 ist ferner eingerichtet, die mittels der Positionsdetektionseinheit 36 bestimmte Position und Lage seines Manipulators 18 über die Kommunikationsschnittstelle 32 zu senden und entsprechende Positions- und Lagedaten anderer Bauroboter zu empfangen.

**Fig. 2** zeigt in einer schematischen Darstellung ein erstes Baurobotersystem **100** zur Ausführung von Bauaufgaben auf einer Baustelle, das drei Bauroboter **10.1, 10.2** und **10.3** umfasst.

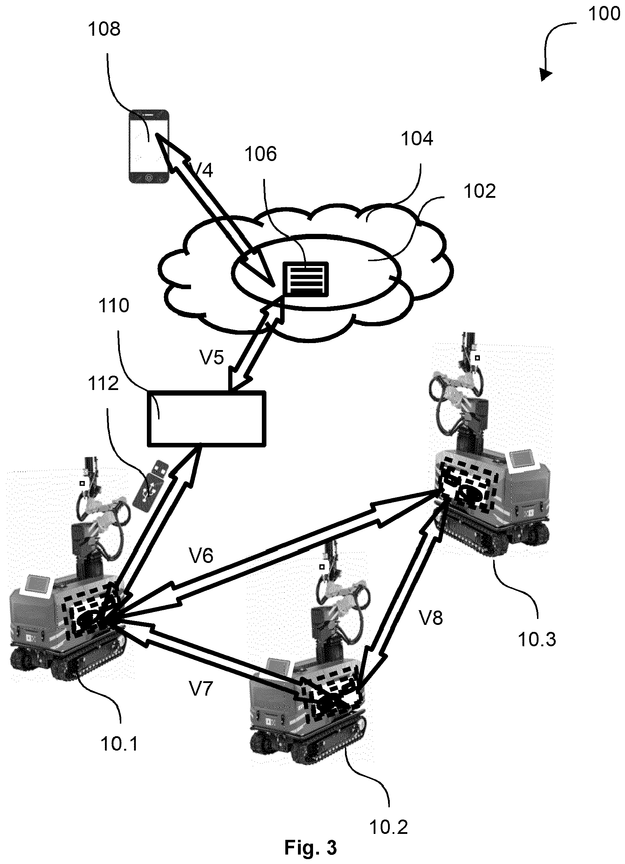

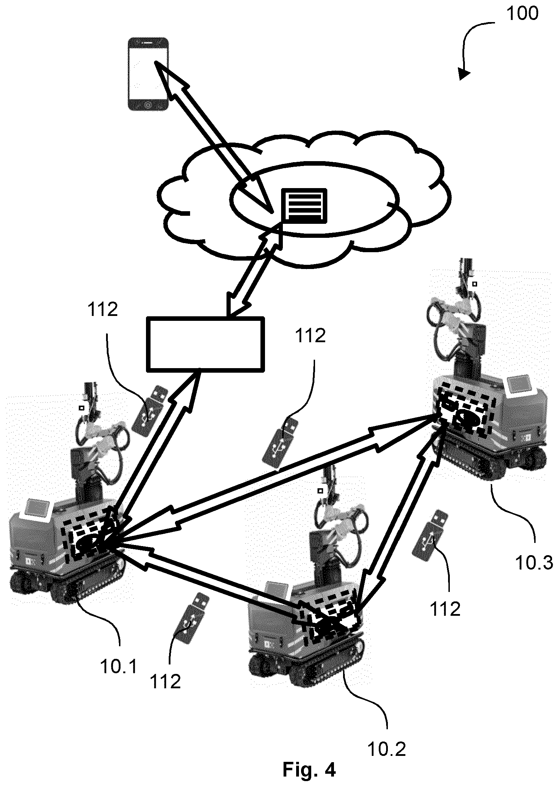

Bei diesem Ausführungsbeispiele eines Baurobotersystems 100 sowie bei den nachfolgend im Zusammenhang mit den Fig. 3 und Fig. 4 beschriebenen Ausführungsbeispielen von Baurobotersystemen 100 entsprechen die Bauroboter 10.1, 10.2 und 10.3 in ihrem Aufbau und ihrem Funktionsumfang dem in Bezug auf Fig. 1 beschriebenen Bauroboter 10. Sie können noch weitere, über die vorangehend beschriebenen Merkmale, insbesondere weitere Funktionalitäten, aufweisen.

Weiter umfasst das Baurobotersystem 100 ein globales Bauaufgabenverwaltungssystem **102,** das mittels einer Cloud-basierten Rechnereinheit **104** mit einer Speichereinheit, auf der ein entsprechender Programmcode ausführbar gespeichert ist und auf der eine globale Bauaufgabenliste **106** gespeichert ist, realisiert ist. In der globalen Bauaufgabenliste 106 sind alle auf der betreffenden Baustelle auszuführende Bauaufgaben abgelegt. Dazu ist das globale Bauaufgabenverwaltungssystem 102 ist eingerichtet, die globale Bauaufgabenliste 106 abrufbar zu speichern.

Die Bauroboter 10.1, 10.2 und 10.3 sind eingerichtet, über ihre Kommunikationsschnittstelle 32 mit dem globalen Bauaufgabenverwaltungssystem 102 zu kommunizieren. Dazu sind Datenverbindungen **V1, V2, V3** über ein überregionales Mobilfunknetz, beispielsweise nach dem 4G- oder dem 5G-Standard, in Verbindung mit dem Internet zwischen den Baurobotern 10.1, 10.2 und 10.3, insbesondere deren jeweiligen Kommunikationsschnittstellen 32, und der cloud-basierten Rechnereinheit 104 und damit dem globalen Bauaufgabenverwaltungssystem 102 aufbaubar und im Zustand gemäß Fig. 2 aufgebaut.

Die Bauroboter 10.1, 10.2 sowie 10.3 können ferner über die Datenverbindungen V1, V2 und V3 die mit ihren Positionsdetektionseinheiten 36 (Fig. 1) bestimmten Positionen und Lagen an das globale Bauaufgabenverwaltungssystem 102 übermitteln.

Ferner umfasst das Baurobotersystem 100 noch ein Mobiltelefon **108,** das über eine Datenverbindung **V4,** insbesondere über das überregionale Mobilfunknetz, ebenfalls mit der Cloud-basierten Rechnereinheit 104 und damit mit dem globalen Bauaufgabenverwaltungssystem 102 verbindbar und im Zustand gemäß Fig. 2 verbunden ist.

Somit kann ein Benutzer des Mobiltelefons 108 das globale Bauaufgabenverwaltungssystem 102 abfragen und beispielsweise eine Übersicht über den aktuellen Baufortschritt auf der betreffenden Baustelle erhalten.

Bei diesem Baurobotersystem 100 werden initial alle auf der Baustelle auszuführenden Bauaufgaben in Form von BIM-Planungsdaten in der globalen Bauaufgabenliste 106 gespeichert.

Die Bauroboter 10.1, 10.2 und 10.3 übertragenen ihre jeweils bestimmten Positionen und Lagen an das globale Bauaufgabenverwaltungssystem 102.

Das globale Bauaufgabenverwaltungssystem 102 teilt unter Berücksichtigung der Positionen und Lagen der Bauroboter 10.1, 10.2 und 10.3 die in der globalen Bauaufgabenliste 106 enthaltenen Bauaufgaben auf die Bauroboter 10.1, 10.2 und 10.3 auf. Anschließend werden die den Baurobotern 10.1, 10.2 und 10.3 jeweils zugeordneten Bauaufgaben über die Datenverbindungen V1, V2 und V3 zur Ausführung zugesandt.

Die Bauroboter 10.1, 10.2 und 10.3 speichern die auszuführenden Bauaufgaben in ihren internen Bauaufgabenlisten 30 (Fig. 1) ab. Anschließend führen sie sie konsekutiv aus, insbesondere bohren die Bauroboter 10.1, 10.2 und 10.3 den Bauaufgaben entsprechende Bohrungen in Decken und Wänden der Baustelle.

Jeweils nach Abschluss einer Bauaufgabe wird der aktualisierte zugehörige Bauaufgabenzustand, also die Erledigung, an das globale Bauaufgabenverwaltungssystem 102 gesandt, das sodann die globale Bauaufgabenliste 106 entsprechend aktualisiert.

Sobald einer der Bauroboter 10.1, 10.2 oder 10.3 alle Bauaufgaben seiner internen Bauaufgabenliste ausgeführt, fragt er das globale Bauaufgabenverwaltungssystem 102 ab, um verbleibende Bauaufgaben, vorzugsweise in seiner Nähe, zu übernehmen. Sofern eine bereits einem anderen Bauroboter 10.1, 10.2 oder 10.3 zugeordnete Bauaufgabe umgewidmet bzw. neu zugeordnet wird, sendet das globale Bauaufgabenverwaltungssystem 102 eine entsprechende Benachrichtigung an den entsprechenden Bauroboter 10.1, 10.2 oder 10.3.

**Fig. 3** zeigt ein weiteres Baurobotersystem 100, das, soweit im Folgenden nicht anders beschrieben, dem vorangehend beschriebenen Baurobotersystem 100 gemäß Fig. 2 entspricht.

Ein Unterschied besteht jedoch darin, dass die Bauroboter 10.2 und 10.3, beispielsweise aufgrund ihres jeweiligen Standorts, keine Datenverbindung zu dem überregionalen Mobilfunknetz und damit auch keine direkte Datenverbindung zu dem globalen Bauaufgabenverwaltungssystem 102 aufbauen können.

Dies ist auch dem ersten Bauroboter 10.1 nicht möglich. Jedoch besteht eine Datenverbindung **V5** über das überregionale Mobilfunk zwischen einer Relaisstation **110** und dem globalen Bauaufgabenverwaltungssystem 102.

Zwischen der Relaisstation 110 und dem ersten Bauroboter 10.1 können Daten mittels einer als tragbarer USB-Speichereinheit ausgebildeten tragbaren Speichereinheit **112** ausgetauscht werden.

Kann der Bauroboter 10.1 eine Verbindung zum überregionalen Mobilfunknetz aufbauen, so kann auf die Relaisstation 110 zugunsten einer direkten Verbindung des Bauroboters 10.1 mit dem überregionalen Mobilfunknetz verzichtet werden.

Des Weiteren ist ein Datenaustausch über Datenverbindungen **V6, V7** und **V8** zwischen den Baurobotern 10.1, 10.2 und 10.3 über deren jeweilige Kommunikationsschnittstellen 32 (Fig. 1), insbesondere deren WLAN-Schnittstellen, möglich.

Abweichend von dem vorangehenden Ausführungsbeispiel sendet bei diesem Baurobotersystem 100 das globale Bauaufgabenverwaltungssystem Daten, insbesondere Bauaufgaben und / oder Bauaufgabenzustände, über die Relaisstation 110 und mittels der tragbaren Speichereinheit 112 zunächst an den Bauroboter 10.1, der die Daten gegebenenfalls entsprechend zu den Baurobotern 10.2 oder 10.3 weiterleitet.

Daten, die an das globale Bauaufgabenverwaltungssystem 102 weiterzuleiten sind, werden durch den Bauroboter 10.1 bis zur nächsten Datenübermittlung über die tragbare Speichereinheit 112 gesammelt und dann gesammelt an die Relaisstation 110 zur Weiterleitung an das globale Bauaufgabenverwaltungssystem 102 übermittelt.

Zur Verlängerung der Reichweite des WLAN-Netzwerks leiten auch die Bauroboter 10.2 und 10.3 gegebenenfalls Daten durch.

Fällt die Datenverbindung zwischen der Relaisstation 110 und dem globalen Bauaufgabenverwaltungssystem 102, insbesondere temporär, aus oder findet, beispielsweise über einen vorgebbaren Mindestzeitraum hinweg, keine Datenübermittlung per tragbarer Speichereinheit 112 statt, wechseln die Bauroboter 10.1, 10.2 und 10.3 beziehungsweise die jeweiligen internen Bauaufgabenverwaltungssysteme 29 (Fig. 1) ihren Betriebsmodus. Insbesondere senden sie jeweils nach einer Änderung ihrer jeweiligen internen Bauaufgabenliste 30 (Fig. 1) diese an die jeweils beiden anderen der Bauroboter 10.1, 10.2, 10.3, sodass jeder der Bauroboter 10.1, 10.2 und 10.3 eine lokale Kopie der globalen Bauaufgabenliste 106 zusammenstellen und verwenden kann.

**Fig. 4** zeigt ein weiteres Baurobotersystem 100, das, soweit nicht anders beschrieben, dem in Bezug auf Fig. 3 beschriebenen Baurobotersystem 100 entspricht.

Im Unterschied hierzu sind in der in Fig. 4 dargestellten Situation jedoch auch keine WLAN-Datenverbindungen zwischen den Baurobotern 10.1, 10.2 und 10.3 aufbaubar. Eine solche Situation kann sich beispielsweise bei mehrstöckigen Hoch- oder Tiefbauten, insbesondere aus eisenarmiertem Beton, ergeben, insbesondere dann, wenn die Bauroboter 10.1, 10.2 und 10.3 durch tragende Wände oder Decken voneinander getrennt sind.

In dieser Situation erfolgen Datenübermittlungen zwischen den Baurobotern 10.1, 10.2 und 10.3 daher mittels einer oder mehrerer tragbarer Speichereinheiten 112.

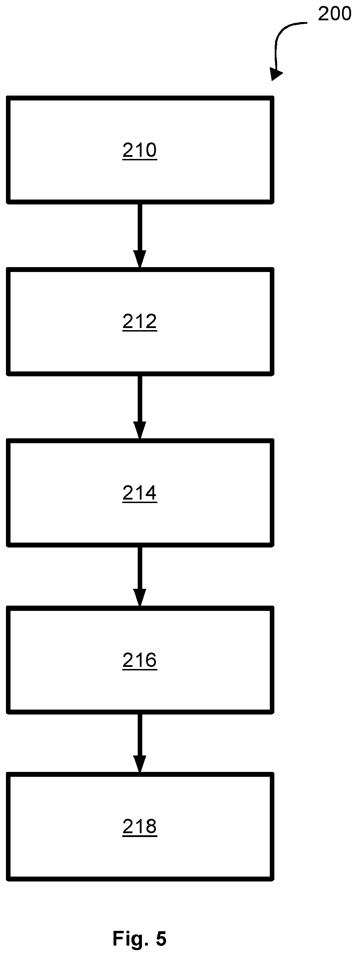

Fig. 5 zeigt abschließend ein Ablaufdiagramm einer Variante des erfindungsgemäßen Verfahrens in Form des Verfahrens **200.** Das Verfahren 200 wird zum besseren Verständnis der Erfindung unter Bezugnahme auf die in Fig. 1 bis Fig. 4 für Elemente der Bauroboter 10.1, 10.2, 10.3 und der Baurobotersysteme 100 eingeführten Bezugszeichen näher erläutert.

In einem Vorbereitungsschritt **210** senden die Bauroboter 10.1, 10.2, 10.3 die durch ihre Positionsdetektionseinheiten 36 ermittelten Positionen und Lagen an das globale Bauaufgabenverwaltungssystem 102. Bei Varianten des Verfahrens werden zudem Informationen über Merkmale und / oder Zustände der Bauroboter 10.1, 10.2, 10.3, beispielsweise über ihre Verfügbarkeit, über verfügbare Werkzeuge, beispielsweise Arten verfügbarer Bohrwerkzeuge, oder dergleichen, übermittelt.

In einem Verteilungsschritt **212** ordnet das globale Bauaufgabenverwaltungssystem 102 die noch auszuführenden Bauaufgaben den Baurobotern 10.1, 10.2, 10.3 unter Berücksichtigung der im Vorbereitungsschritt 210 erhaltenen Daten, insbesondere der Positionen und Lagen, zu und sendet die zugeordneten Bauaufgaben an die jeweiligen Bauroboter 10.1, 10.2, 10.3. Die Bauroboter 10.1, 10.2, 10.3 legen die empfangenen Bauaufgaben in ihren internen Bauaufgabenlisten ab.

Denkbar ist alternativ auch, dass ein Benutzer des Verfahrens 200 bzw. des Baurobotersystems 100 die Zuordnung manuell, beispielsweise mittels des Mobiltelefons 108, durchführt und / oder bei einem oder mehreren der Bauroboter 10.1, 10.2 und 10.3 Bauaufgaben manuell der jeweiligen internen Bauaufgabenliste hinzufügt.

In einem Ausführungsschritt **214** führen die Bauroboter 10.1, 10.2, 10.3 die Bauaufgaben ihrer internen Bauaufgabenlisten aus. Bei einer Verfahrensvariante kann vorgesehen sein, dass die in den internen Bauaufgabenlisten enthaltenen Bauaufgaben durch den Benutzer des Verfahrens 200 bzw. des Baurobotersystems 100 manuell geändert werden können. Auch ist denkbar, dass der Benutzer Ausführungen von Bauaufgaben vor Beginn der Ausführung manuell bestätigen muss bzw. bestätigt. Während und / oder nach der Ausführung einer Bauaufgabe legen die Bauroboter 10.1, 10.2, 10.3 in ihren jeweiligen internen Bauaufgabenlisten einen zugehörigen Bauaufgabenzustand ab. Insbesondere speichern sie ab, ob eine Aufgabe erfolgreich ausgeführt werden konnte oder ob ein Fehler und gegebenenfalls welcher Fehler bei der Ausführung aufgetreten ist. Sofern erforderlich, kann in diesem Ausführungsschritt 214 vorgesehen sein, dass die Bauroboter 10.1, 10.2, 10.3 ihren Standort wechseln und sich insbesondere entsprechend an eine oder mehrere der von ihnen auszuführenden Bauaufgaben an eine andere Stelle auf der Baustelle begeben. Standortverlagerungen können dabei autonom erfolgen. Alternativ ist denkbar, dass der Benutzer eine erforderliche Standortverlagerung überwacht und / oder manuell steuert.

In einem Aktualisierungsschritt **216** senden die Bauroboter 10.1, 10.2, 10.3 die in ihren internen Bauaufgabenlisten 30 abgelegten Bauaufgabenzustände mittels ihrer jeweiligen Kommunikationsschnittstellen 32 an das globale Bauaufgabenverwaltungssystem 102. Dieses aktualisiert seine globale Bauaufgabenliste 106.

Bei alternativen Verfahrensvarianten, beispielsweise, wenn keine Datenverbindung zum globalen Bauaufgabenverwaltungssystem 102 aufbaubar ist, tauschen die Bauroboter 10.1, 10.2, 10.3 Bauaufgaben und Bauaufgabenzustände, wie vorangehend zu Fig. 3 oder 4 beschrieben, untereinander aus.

In einem Abschlussschritt **218** des Verfahrens 200 prüft das globale Bauaufgabenverwaltungssystem 102, ob alle Bauaufgaben erfolgreich ausgeführt sind.

Bei vollständig erfolgreicher Ausführung aller von den Baurobotern 10.1, 10.2, 10.3 ausführbaren Bauaufgaben endet das Verfahren 200. Es kann, insbesondere mit neuen Bauaufgaben, erneut ausführbar sein.

Im Falle von fehlerhaften Ausführungen sendet das globale Bauaufgabenverwaltungssystem 102 eine Störungsmeldung an das Mobiltelefon 108, das diese sodann dem Benutzer mitteilt und den Benutzer zur Eingabe einer Entscheidung über das weitere Vorgehen auffordert. Die Eingabe des Benutzers wird vom Mobiltelefon 108 an das globale Bauaufgabenverwaltungssystem 102 übermittelt. Entsprechend der Entscheidung beziehungsweise der Eingabe des Benutzers wird das Verfahren 200 abgebrochen oder mit den noch nicht vollständig ausgeführten Bauaufgaben mit dem Vorbereitungsschritt 210, bei einer alternativen Verfahrensvariante mit dem Verteilungsschritt 212, fortgesetzt.

### Bezugszeichenliste

- 10, 10.1, 10.2, 10.3: Bauroboter
- 12: Fahrwerk
- 14: Gehäuse
- 16: Steuerraum
- 18: Manipulator
- 20: Endeffektor
- 22: Bohrwerkzeugmaschine
- 24: Staubabsaugungsvorrichtung
- 26: Rechnereinheit
- 28: Speichereinheit
- 29: internes Bauaufgabenverwaltungssystem
- 30: interne Bauaufgabenliste
- 32: Kommunikationsschnittstelle
- 34: Anzeigeeinheit
- 36: Positionsdetektionseinheit
- 100: Baurobotersystem
- 102: globales Bauaufgabenverwaltungssystem
- 104: Rechnereinheit
- 106: globale Bauaufgabenliste
- 108: Mobiltelefon
- 110: Relaisstation
- 112: Speichereinheit
- 200: Verfahren
- 210: Vorbereitungsschritt
- 212: Verteilungsschritt
- 214: Ausführungsschritt
- 216: Aktualisierungsschritt
- 218: Abschlussschritt
- V1, V2, V3, V4, V5, V6, V7, V8: Datenverbindung

## Patentansprüche

1. **Bauroboter** (10, 10.1, 10.2, 10.3) zur Ausführung von Bauaufgaben auf einer Baustelle, insbesondere einer Hochbau- und / oder einer Tiefbau-Baustelle, umfassend
- wenigstens einen Manipulator (18) zur Ausführung einer Bauaufgabe,
- ein internes Bauaufgabenverwaltungssystem (29), das eingerichtet ist, eine interne Bauaufgabenliste (30) des Bauroboters (10, 10.1, 10.2, 10.3) abrufbar zu speichern, wobei die interne Bauaufgabenliste (30) ein oder mehrere vom Bauroboter (10, 10.1, 10.2, 10.3) auf der Baustelle auszuführende Bauaufgaben umfasst, und
- eine Kommunikationsschnittstelle (32) zur Kommunikation mit einem externen Bauaufgabenverwaltungssystem, wobei das externe Bauaufgabenverwaltungssystem eingerichtet ist, eine externe Bauaufgabenliste abrufbar zu speichern, wobei die externe Bauaufgabenliste ein oder mehrere auf der Baustelle auszuführende Bauaufgaben umfasst,
wobei der Bauroboter (10, 10.1, 10.2, 10.3) eingerichtet ist, über die Kommunikationsschnittstelle (32) wenigstens eine Bauaufgabe und / oder einen Bauaufgabenzustand einer Bauaufgabe der internen Bauaufgabenliste (30) an das externe Bauaufgabenverwaltungssystem zu senden.

2. Bauroboter nach dem vorhergehenden Anspruch, **dadurch gekennzeichnet, dass** der Bauroboter (10, 10.1, 10.2, 10.3) eine Anzeigeeinheit (34) aufweist, die eingerichtet ist, wenigstens eine Bauaufgabe der internen Bauaufgabenliste (30), vorzugsweise alle Bauaufgaben der internen Bauaufgabenliste (30), und / oder wenigstens einen Bauaufgabenzustand anzuzeigen.

3. Bauroboter nach einem der vorhergehenden Ansprüche, **dadurch gekennzeichnet, dass** die Kommunikationsschnittstelle (32) eine drahtlose Kommunikationsschnittstelle, beispielsweise eine allgemein als "WLAN"- und / oder allgemein als "Bluetooth"-Schnittstelle bekannte Schnittstelle, umfasst.

4. Bauroboter nach einem der vorhergehenden Ansprüche, **dadurch gekennzeichnet, dass** die Kommunikationsschnittstelle (32) zur Datenübertragung mittels einer tragbaren Speichereinheit (112) eingerichtet ist.

5. Bauroboter nach einem der vorhergehenden Ansprüche, **dadurch gekennzeichnet, dass** der Bauroboter (10, 10.1, 10.2, 10.3) eine Positionsdetektionseinheit (36) zur Bestimmung seiner Position und / oder seiner Lage, insbesondere einer Position und / oder einer Lage seines Manipulators (18), aufweist.

6. Bauroboter nach einem der vorhergehenden Ansprüche, **dadurch gekennzeichnet, dass** der Bauroboter (10, 10.1, 10.2, 10.3) eingerichtet ist, wenigstens eine Position und / oder eine Lage, insbesondere seiner selbst und / oder seines Manipulators (18) und / oder eines anderen Bauroboters (10, 10.1, 10.2, 10.3) und / oder eines anderen Manipulators (18), über die Kommunikationsschnittstelle (32) zu empfangen und / oder zu senden.

7. **Baurobotersystem** (100) zur Ausführung von Bauaufgaben auf einer Baustelle, umfassend einen ersten Bauroboter (10, 10.1, 10.2, 10.3) nach einem der vorhergehenden Ansprüche und ein externes Bauaufgabenverwaltungssystem, das eingerichtet ist, eine externe Bauaufgabenliste abrufbar zu speichern, wobei die externe Bauaufgabenliste ein oder mehrere auszuführende Bauaufgaben umfasst, und wobei der erste Bauroboter (10, 10.1, 10.2, 10.3) eingerichtet ist, über seine Kommunikationsschnittstelle (32) mit dem externen Bauaufgabenverwaltungssystem zu kommunizieren.

8. Baurobotersystem nach dem vorhergehenden Anspruch, **dadurch gekennzeichnet, dass** das externe Bauaufgabenverwaltungssystem ein globales Bauaufgabenverwaltungssystem (102) umfasst, das eingerichtet ist, eine globale Bauaufgabenliste (106) abrufbar zu speichern, wobei die globale Bauaufgabenliste (106) ein oder mehrere auf der Baustelle auszuführende Bauaufgaben umfasst.

9. Baurobotersystem nach einem der Ansprüche 7 oder 8, umfassend wenigstens einen zweiten Bauroboter (10, 10.1, 10.2, 10.3) nach einem der Ansprüche 1 bis 6, wobei das externe Bauaufgabenverwaltungssystem das interne Bauaufgabenverwaltungssystem (29) des zweiten Bauroboters umfasst.

10. Baurobotersystem nach einem der Ansprüche 7 bis 9, **dadurch gekennzeichnet, dass** der erste Bauroboter (10, 10.1, 10.2, 10.3) eingerichtet ist, dem zweiten Bauroboter (10, 10.1, 10.2, 10.3) und / oder dem globalen Bauaufgabenverwaltungssystem (102) über seine Kommunikationsschnittstelle (32) wenigstens eine Bauaufgabe und / oder wenigstens einen Bauaufgabenzustand zu senden.

11. Baurobotersystem nach einem der Ansprüche 7 bis 10, **dadurch gekennzeichnet, dass** das Baurobotersystem (100) eine Relaisstation (110) zur Übermittlung wenigstens einer Bauaufgabe und / oder wenigstens eines Bauaufgabenzustands umfasst.

12. **Verfahren** (200) zur Steuerung wenigstens eines Bauroboters (10, 10.1, 10.2, 10.3) eines Baurobotersystems (100) nach einem der Ansprüche 7 bis 11, **dadurch gekennzeichnet, dass** wenigstens eine Bauaufgabe und / oder ein Bauaufgabenzustand der internen Bauaufgabenliste (30) des Bauroboters (10, 10.1, 10.2, 10.3) an das externe Bauaufgabenverwaltungssystem gesandt wird.

13. Verfahren nach dem vorhergehenden Anspruch, **dadurch gekennzeichnet, dass** zumindest eine Bauaufgabe und / oder ein Bauaufgabenzustand der internen Bauaufgabenliste (30) eines ersten Bauroboters (10, 10.1, 10.2, 10.3) an das interne Bauaufgabenverwaltungssystem (29) eines zweiten Bauroboters (10, 10.1, 10.2, 10.3) gesandt wird.

14. Verfahren nach einem der Ansprüche 12 oder 13, **dadurch gekennzeichnet, dass** zumindest eine Bauaufgabe und / oder ein Bauaufgabenzustand der internen Bauaufgabenliste (30) des ersten Bauroboters (10, 10.1, 10.2, 10.3) an das globale Bauaufgabenverwaltungssystem (102) gesandt wird.

15. Verfahren nach einem der Ansprüche 12 bis 14, **dadurch gekennzeichnet, dass** wenigstens einem der Bauroboter (10, 10.1, 10.2, 10.3) jeweils wenigstens eine auszuführende Bauaufgabe der externen Bauaufgabenliste in Abhängigkeit von seiner jeweiligen Position und / oder seiner Lage übermittelt wird.
